# DEMANDE DE BREVET EUROPEEN

(11) **EP 0 708 402 A1**
(43) Date de publication de la demande: **24.04.1996**
(21) Numéro de dépôt: 94402197.1
(22) Date de dépôt: 03.10.1994
(51) Int. Cl.: G06F 11/00

(54) **L'aide à la mise au point d'applications réparties**

(71) Demandeur: BULL S.A., F-92800 Puteaux (FR)
(72) Inventeur: Kadima, Hubert, F-78570 Andresy (FR); Aydin, Alev, F-78990 Elancourt (FR)
(74) Mandataire: Gouesmel, Daniel

(57) **Abrégé**

Outil (DAT) d'aide à la mise au point d'applications réparties (AC, AS1-AS2) dans un environnement (ENV) informatique distribué de type DCE incluant une plate-forme centrale (MFC) associée à une pluralité de plate-formes secondaires (HC1, HC2), constituant ainsi un système réparti, caractérisé en ce que il comprend :
- un processus-contrôleur (CNT) de surveillance de l'état global du système réparti, implanté sur la plate-forme centrale (MFC),
- des processus-agents (AG11, AG12, AG21, AG22, AG23) de mise au point implantés sur chaque plate-forme secondaire (HC1, HC2), supportant toutes les actions génériques locales de tests des processus de chaque application (AS1, AS2) tournant sur celle-ci,
- un ensemble de processus-DAEMONs (DM1, DM2) dont chacun sert d'interface entre les dits processus-agents implantés sur une même plate-forme secondaire et le processus-contrôleur (CNT).

Applicable aux systèmes informatiques répartis.

## Description

La présente invention concerne un outil d'aide à la mise au point d'applications réparties dans un environnement informatique distribué de type DCE (sigle anglo-saxon de Distributed Computing Environment) , ce dernier étant décrit dans les publications "OSF Distributed Computing Environment Rationale" de l'Open Software Foundation", Inc. en date du 14/05/90 et "Distributed Computing Environment, an overview", de janvier 1992.

Un tel environnement comprend une pluralité de systèmes informatiques hétérogènes, construits par exemple par des constructeurs différents, et ayant des systèmes d'exploitation (operating system, en anglais) différents, ces systèmes étant reliés entre eux par un réseau. En d'autres termes, il est formé par plusieurs plate-formes ou machines interconnectées en réseau sur lesquels sont réparties les applications à faire tourner. Il constitue ainsi un système réparti.

On peut dire également qu'il constitue un ensemble de services distribués qui sont situés entre les applications et le Logiciel spécifique du réseau et autorisent le développement, l'exécution et l'exploitation d'applications réparties sur des machines hétérogènes distribuées en réseau. Il offre ainsi la possibilité de répartir et de synchroniser données et applications sur un réseau multi-constructeurs.

L'aide à la mise au point des applications réparties en environnement DCE (on dit encore réparties sous DCE), nécessitant de nombreux tests, de programmes séquentiels et répartis est un problème difficile et extrêmement complexe, et ce d'autant plus s'il s'agit de programmes comportant des traitements parallèles en milieu réparti. Ceci provient essentiellement du non-déterminisme des exécutions simultanées (exécutions parallèles) qui entraîne au cours du temps des comportements difficilement reproductibles.

Dans la pratique courante, d'une part, les fonctionnalités actuelles des metteurs au point de programmes séquentiels, disponibles sur le marché, sont insuffisantes pour prendre en compte les caractéristiques inhérentes aux systèmes répartis, et d'autre part, il n'existe pas d'outil industriel d'aide au développement d'applications réparties sous DCE.

La disponibilité d'outils performants et efficaces est donc indispensable. Ceux-ci doivent, par ailleurs, s'insérer dans un environnement de programmation convivial, une interface graphique évoluée, de type Xwindow/Motif, par exemple.

La présente invention répond à ces exigences et concerne un outil d'aide à la mise au point d'applications réparties en environnement DCE, lequel permet de contrôler l'état de tous les processus en cours d'exécution à un instant donné à partir d'une machine de mise au point spécialisée (plate-forme centrale encore appelée machine focale de test) qui a une vision d'ensemble de toutes les plate-formes qui participent à la campagne de mise au point, d'une part, et des processus qui s'y exécutent, d'autre part.

Selon l'invention, l'outil d'aide à la mise au point (debogging, en anglais) d'applications réparties dans un environnement informatique distribué de type DCE comportant une pluralité de systèmes informatiques hétérogènes, à systèmes d'exploitation différents, reliés entre eux par un réseau l'environnement incluant une plate-forme centrale associée à une pluralité de plate-formes secondaires sur lesquelles sont réparties les applications et constituant ainsi un système réparti, l'outil permettant de tester tous les processus composant chaque application, est caractérisé en ce qu'il comprend :
- un processus-contrôleur de surveillance de l'état global du système réparti, implanté sur la plate-forme centrale,
- des processus-agents de mise au point implantés sur chaque plate-forme, supportant toutes les actions génériques locales de tests des processus de chaque application tournant sur celle-ci,
- un ensemble de processus-DAEMONs dont chacun sert d'interface entre les divers processus-agents implantés sur un même plate-forme et le processus-contrôleur, chacun d'entre eux contrôlant localement toutes les actions communes à l'ensemble des processus-agents impliqués dans des actions de mise au point.

Un tel outil permet d'exécuter les deux catégories de tests nécessaires à la mise au point d'applications sous DCE, à savoir les tests de développement et les tests d'acceptation. On rappelle que les premiers sont effectués du point de vue du développeur et comportent le test unitaire, le test d'intégration et le test du système complet, alors que les seconds le sont du point de vue de l'utilisateur et sont effectués à deux fins : la recette et la maintenance.

D'autres caractéristiques et avantages de la présente invention apparaîtront dans la description suivante donnée à titre d'exemple non limitatif et en se référant aux dessins annexés. Sur ces dessins :
- La figure 1 montre l'architecture globale de l'outil d'aide au développement d'applications, selon l'invention,
- La figure 2 montre les différentes interactions de test d'une application client-serveur sous DCE ayant lieu dans le cadre de l'outil, selon l'invention,
On se reporte à la figure 1.

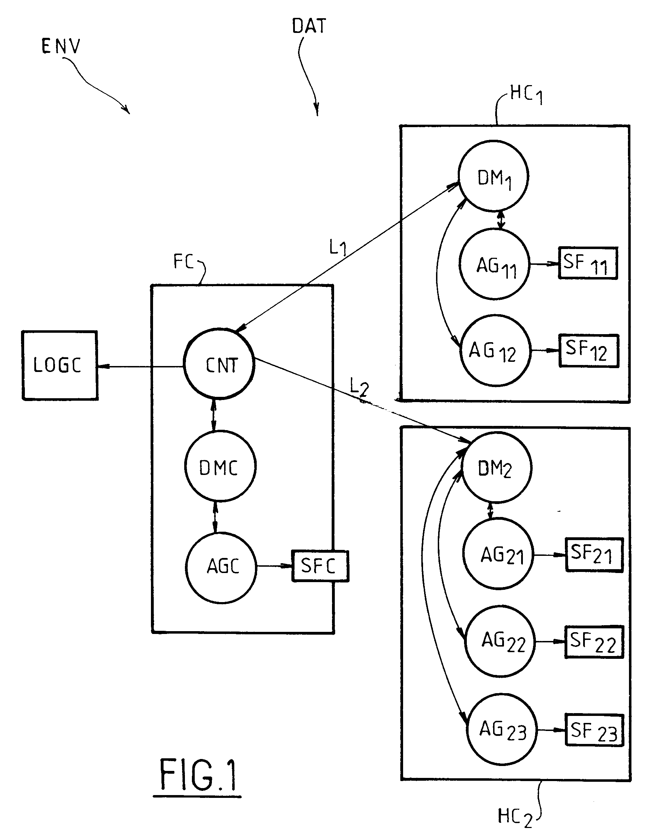

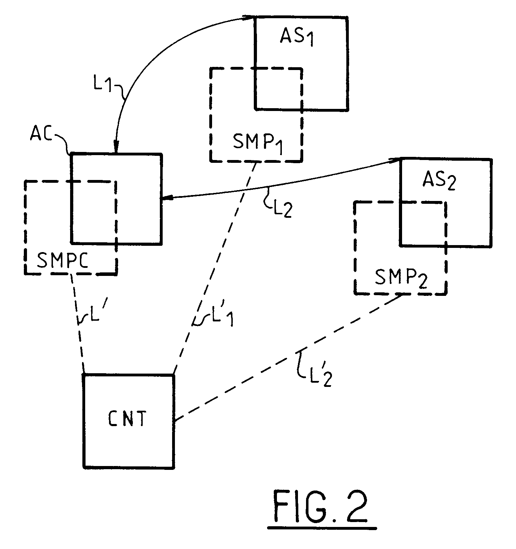

L'outil d'aide à la mise au point d'applications DAT, selon l'invention, s'insère à l'intérieur d'un environnement informatique hétérogène distribué ENV de type DCE, lequel comprend les éléments constitutifs suivants :
- La plate-forme centrale , encore appelée machine focale de test, à savoir PFC,
- Les plate-formes secondaires, encore appelées hôtes-cibles, dont on a représenté seulement deux exemplaires, pour simplifier la figure 2, à savoir HC1 et HC2, mais il est évident que le nombre de ceux-ci peut être quelconque. Il reste entendu dans la suite du texte que ces derniers sont des machines participant à une (ou plusieurs) session de tests. On dit encore que ces machines participent à une campagne de tests.
PFC, HC1, HC2 sont connectés à un même réseau de type quelconque (de type ETHERNET, FDDI, etc.), non représenté pour simplifier la figure 1.

L'outil DAT comprend les éléments caractéristiques essentiels suivants :
- Le processus-contrôleur CNT de surveillance de l'état global du système réparti, implanté sur l'hôte central PFC.
- Les processus-agents de mise au point des applications, à savoir :
   - AGC, implanté sur PFC.
   - AG11, AG12, implantés sur HC1,
   - AG21, AG22, AG23, implantés sur HC2,
   qui sont donc implantés sur chaque plate-forme appartenant à l'environnement ENV, et supportent toutes les actions génériques locales de mise au point des processus de chaque application qui tournent sur celle-ci. Ils travaillent en liaison avec tout logiciel de mise au point que l'on peut trouver sur le marché, par exemple tout metteur au point travaillant sous système d'exploitation UNIX, ce dernier étant fréquemment utilisé dans les environnements de type DCE.

- Un ensemble de processus-DAEMONs, à savoir :
   - DMC implanté sur MFC,
   - DM1 sur HC1,
   - DM2 sur HC2,
   qui sont donc également implantés sur chaque système de ENV, et qui servent chacun d'interface entre les divers processus-agents implantés sur un même serveur (il en est de même pour DMC vis-à-vis de AGC) et le processus-contrôleur CNT, chacun d'entre eux contrôlant localement toutes les actions communes à l'ensemble des processus-agents impliqués dans les actions de mise au point. On rappelle que, par exemple, dans le monde UNIX, on définit un processus-DAEMON comme un processus dormant, réactivable sur événement. On définit par évènement toute commande utilisateur lancée depuis PFC pour tout besoin de mise au point de toute application répartie.
- Des systèmes de fichiers associés chacun à l'un des processus-agents, à savoir, respectivement SFC à AC, SF11 et SF12 à AG11 et AG12, SF21, SF22, SF23 à respectivement AG21, AG22, AG23. Par ailleurs un fichier central LOGC est associé au contrôleur CNT.

Dans la suite du texte, pour des raisons de simplicité, les processus-contrôleur, processus-agents, processus-DAEMONs, seront plus simplement appelés respectivement contrôleur, agents et DAEMONs.

Les caractéristiques fonctionnelles essentielles de l'outil DAT sont :
- 1) Le contrôle de l'état global des processus qui s'exécutent dans ENV à partir d'une machine centrale de mise au point unique, en l'occurrence PFC
- 2) L'utilisation de la procédure de communication connue de type RPC, utilisée dans DCE en tant que vecteur de communication entre le contrôleur CNT et les agents et DAEMONs implantés sur les différentes plate-formes participant à une session de mise au point, ici HC1 et HC2. Dans cette optique, CNT est client DCE par rapport aux divers DAEMONs de tests, DM12, DM2, etc., ces derniers étant serveurs DCE vis-à-vis de CNT et clients DCE vis-à-vis des agents AG11-AG12, AG21-AG22-AG23, respectivement, les agents eux-mêmes étant serveurs. Il reste entendu que la notion de client et de serveur est définie dans les documents précités relatifs à DCE.
- 3) Le contrôle des événements générés en cours de mise au point (ce qui s'appelle également effectuer des traces) et la recherche de leur interdépendance causale en utilisant le mécanisme des horloges vectorielles pour caractériser la dépendance causale entre les événements générés sur chacune des plate-formes participant à une session de mise au point, ici PFC, HC1, HC2 et qui affectent donc chacune des applications testées.
- 4) Maintien de la cohérence de fonctionnement du système en cours de mise au point.
- 5) Détection des interblocages entre processus et chaînages ( appelés "threads", en anglais).
- 6) Détection des terminaisons de tous les processus d'une application, qu'ils soient sur PFC, ou HC1, ou HC2, etc.

En ce qui concerne la caractéristique 1, la machine PFC a une vision d'ensemble de toutes les autres machines participant à une session de mise au point, ici HC1 et HC2.

C'est à son niveau que sont lancées toutes les opérations de contrôle d'exécution des programmes en cours de mise au point, la gestion de toutes les opérations correspondantes s'effectuant à partir d'une interface graphique évoluée de type X/Window/Motif, par exemple. Il convient de rappeler qu'une session de mise au point implique un ensemble fini de machines à un instant donné.

Par ailleurs, c'est au niveau de PFC que sont également effectuées les opérations suivantes :
- Détection des interblocages (deadlock, en anglais) entre processus,
- Détection de terminaison des processus,
- Centralisation de toutes les données concernant l'historique de la mise au point des différents processus de chaque application testée, et ce, pour toutes les machines participant à une session de mise au point, exploitation des résultats de synthèse des tests en mettant en valeur les relations de précédence causale entre les différents événements affectant la mise au point des processus d'une application. Les données concernant l'historique de la mise au point sont couramment désignées par l'homme du métier sous le vocable anglo-saxon de Log, terme qui sera employé dans la suite du texte. Elles sont disposées dans des fichiers, appelés fichiers Log. Ceux-ci sont insérés dans les fichiers associés à chaque agent, c'est-à-dire SF11 pour AG11, SF12 pour AG12, etc.

Le contrôle de l'exécution des programmes par CNT s'effectue par le contrôle de l'état global du système DCE dans son ensemble, c'est-à-dire de ENV, ce qui assure :
- a) l'équivalence d'exécution de ceux-ci au cours du temps (ils doivent se reproduire à l'identique au cours du temps),
- b) la reproductibilité d'exécution d'un programme donné dès qu'une erreur est détectée en pouvant le relancer dans le contexte où l'erreur s'est produite,
- c) la cohérence de fonctionnement du système DCE lors de la journalisation des messages et des événements qui se produisent lors de la mise au point,
On rappelle que la journalisation consiste à enregistrer dans un fichier Log tout l'historique de ces messages et événements.

La reproductibilité d'exécution d'un programme réparti est difficile à mettre en oeuvre à cause de son non-déterminisme et des délais variables de transmission de messages. C'est pourquoi il faut pouvoir contrôler efficacement des états globaux recouvrables des processus en cours d'exécution.

Un état global est dit recouvrable s'il est cohérent et comporte les messages reçus par les différents processus depuis leur dernier point de sauvegarde.

Un tel état est constitué par l'ensemble des états de tous les processus en cours d'exécution et des canaux de communication existant entre eux.

La principale difficulté dans un environnement réparti est de pouvoir restaurer un état global des divers processus s'exécutant sur des machines différentes.

La solution apportée par l'outil selon l'invention à ce problème est la journalisation des messages échangés entre processus et celle des états de chacun des processus. Celle-ci ne peut s'effectuer que d'une manière indépendante pour chaque processus, car il est quasiment impossible de journaliser un état global à un instant donné.

Pour chaque processus, on journal se les messages qu'il reçoit, ainsi que les points de sauvegarde de son état, dans le fichier Log qui lui est associé.

Le rôle du contrôleur CNT est alors de recueillir périodiquement les journaux des processus des différentes machines HC1, HC2,...etc. impliquées dans la campagne de tests, lesquels sont donc centralisés à ce niveau dans le fichier LOGC.

Pour ce faire, on utilise, par exemple, la technique définie dans le document "Recovery in distributed systems using optimistic message logging and checkpointing", de D.B. Johnson et W. Swanepoel, publiée dans le journal of algorithms, aux pages 462-491, en 1990. Elle consiste essentiellement à journaliser l'ensemble des messages échangés entre les processus sans synchronisation globale ainsi que l'état des processus lors de la réception des messages. C'est au cours de la reprise après arrêt que le calcul du dernier état recouvrable est effectué.

Ce calcul peut être fait selon un algorithme réparti tel que décrit, par exemple, dans le document "A basic unit of computation in distributed systems" 10 th international conference on distributed computing systems, pages 12-19, en 1990, écrit par M. Ahuja, A.D. Kshemkalyani et T. Carlson.

Si l'on considère la figure 2, on peut voir représentées les diverses interactions entre les composants de ENV dans le cas d'une application répartie entre une application-client AC tournant sur l'hôte MFC, et deux applicationsserveurs AS1 et AS2 tournant sur HC1 et HC2. Ainsi qu'il a été dit plus haut, AC communique avec AS1 et AS2 par des liaisons de type RPC, respectivement L1 et L2.

Par ailleurs, on a représenté sur cette même figure, en ligne interrompue, les liaisons entre le contrôleur CNT et les sessions de mise au point correspondant respectivement à AC, AS1, AS2, à savoir SMPC, SMP1, SMP2, ces liaisons également de type RPC étant respectivement désignées par L, L'1, L'2. C'est par celles-ci que CNT recueille les journaux des états globaux des différents processus mis en oeuvre sur les différentes machines HC1, HC2,...etc.

La mise au point d'un programme réparti implique le contrôle des états successifs de ce dernier et de toutes les informations déclenchant les transitions d'un état à l'autre de ses composants, et l'introduction d'une relation d'ordre entre ces événements de manière à établir leurs interdépendances causales.

Le contrôle des événements générés en cours de test et la recherche de leurs interdépendances causales sont effectuées en utilisant dans ENV, le mécanisme d'horloges vectorielles pour caractériser la dépendance causale entre événements de tous les processus mis en oeuvre sur toutes les machines. Ce mécanisme est, par exemple, décrit dans l'article de F. Mattern, ayant pour titre "Virtual time and global states in distributed systems" publié dans "international conference on parallel and distributed algorithms", publié par North Holland, en 1988, aux pages 215-226.

La cohérence du système en cours de mise au point implique la tenue à jour de journaux fiables reflétant l'état global du système. Ceci est accompli en gérant la journalisation des messages du côté du contrôleur CNT, comme, par exemple indiqué dans l'article de R.E. Strom et S. Yemini "Optimistic recovery in distributed systems", publié dans ACM transactions and computer systems, vol.3, No.3, aux pages 204-226, en août 1985.

En cours de mise au point, l'utilisateur peut activer la détection des interblocages entre les divers processus.

L'interblocage est la situation dans laquelle se trouve un ensemble de processus, telle que chacun d'entre eux attend l'occurrence d'un événement qui ne peut être produit que par un autre processus de ce même ensemble. Cette situation peut être formalisée par le graphe des attentes En milieu réparti, la condition d'interblocage d'un ensemble S de processus est que tous les successeurs d'un élément de S soient dans S. Dans un environnement DCE tel que ENV, les interblocages sont dus aux communications. Selon l'invention, on résout ce problème d'interblocage par l'algorithme de Chandy, Misra et Haas, décrit dans l'article ayant pour titre "distributed deadlock detection" , publié dans ACM TOCS, vol. 1, No.2, aux pages 144-156, en mai 1983.

Le problème du maintien de la cohérence du système en cours de test se pose, lorsque ce dernier s'est arrêté en cours de test (point d'arrêt conditionnel atteint, exception ou arrêt provoqué par l'utilisateur (le metteur au point du programme réparti) : en effet, l'arrêt de tout processus n'est pas instantané et la granularité d'exécution (on rappelle que, en programmation, la granularité d'exécution est la longueur d'une séquence d'exécution à l'intérieur d'un programme) n'est pas nécessairement atteinte : la raison en est que, même si tous les processus ont été observés dans un état passif, (c'est-à-dire sans activité) cela n'indique pas que l'application est terminée : un message émis par un processus non encore observé et qui deviendra ensuite passif, peut, en effet, venir réactiver un processus qui a été observé passif.

L'algorithme de Rana permet de détecter la terminaison de l'exécution de processus dans un environnement DCE sur demande de l'utilisateur. Il est décrit dans l'article de S. P. Rana "A distributed solution of the distributed termination problem", publié dans Information processing letter, Vol. 17, 17 juillet 1983, aux pages 43-46.

## Revendications

1. Outil (DAT) d'aide à la mise au point d'applications réparties (AC, AS1-AS2) dans un environnement (ENV) informatique distribué de type DCE comportant une pluralité de systèmes informatiques hétérogènes (MFC, HC1, HC2), à systèmes d'exploitation différents, reliés entre eux par un réseau l'environnement incluant une plate-forme centrale (MFC) associée à une pluralité de plate-formes secondaires (HC1, HC2) sur lesquelles sont réparties les applications et constituant ainsi un système réparti, l'outil (DAT) permettant de tester tous les processus composant chaque application (AC, AS1, AS2), caractérisé en ce que il comprend :
- un processus-contrôleur (CNT) de surveillance de l'état global du système réparti, implanté sur la plate-forme centrale (MFC),
- des processus-agents (AG11, AG12, AG21, AG22, AG23) de mise au point implantés sur chaque plate-forme secondaire (HC1, HC2), supportant toutes les actions génériques locales de tests des processus de chaque application (AS1, AS2) tournant sur celle-ci
- un ensemble de processus-DAEMONs (DM1, DM2) dont chacun sert d'interface entre les dits processus-agents implantés sur une même plate-forme secondaire et le processus-contrôleur (CNT), chacun d'entre eux contrôlant localement toutes les actions communes à l'ensemble des processus-agents impliqués dans des actions de mise au point.

2. Outil selon la revendication 1, caractérisé en ce que il comprend :
- des systèmes de fichiers associés chacun à l'un des processus-agents (SFC, SF11, SF12, SF21, SF22, SF23), chaque fichier contenant pour tout processus en cours de mise au point sur chaque plate-forme, la journalisation des messages et événements relatifs à celui-ci, définissant l'état global de ce processus,
- Un fichier central (LOGC) où sont centralisés tous les états globaux de tous les processus d'une application répartie en cours de mise au point, constituant ainsi l'état global de l'environnement informatique (ENV) où tourne cette application.

3. Outil selon la revendication 2, caractérisé en ce que la plate-forme centrale (PFC) comprend des moyens de contrôle de l'exécution des programmes en cours de mise au point, la gestion de ces opérations étant effectuées à partir d'une interface graphique évoluée.

4. Outil selon la revendication 2, caractérisé en ce que la plate-forme centrale (PFC) comprend des moyens de détection des interblocages entre processus de toute application en cours de mise au point, constitués par un algorithme de CHANDY, MISRA et HAAS.

5. Outil selon la revendication 2, caractérisé en ce que la plate-forme centrale comprend des moyens de détection de terminaison des processus, constitués par un algorithme de RANA.
